# EUROPEAN PATENT SPECIFICATION

(11) **EP 1 004 478 B1**
(45) Date of publication and mention of the grant of the patent: **09.04.2003**
(21) Application number: 99830702.9
(22) Date of filing: 10.11.1999
(51) Int. Cl.: B60R 13/10

(54) **Improved number plate holder**
Verbesserte Kennzeichenschild-Halterung
Attache améliorée pour plaque minéralogique

(30) Priority: 27.11.1998 IT RM980284 U
(43) Date of publication of application: 31.05.2000
(73) Proprietor: Borri, Giuliana, 00041 Albano Laziale (Roma) (IT)
(72) Inventor: Borri, Giuliana, 00041 Albano Laziale (Roma) (IT)
(74) Representative: Iannone, Carlo Luigi

(56) References cited:
- DE-A- 2 125 929
- DE-A- 2 632 538
- DE-U- 9 411 151
- GB-A- 404 657
- US-A- 4 314 417

## Description

The present invention relates to an improved number plate holder.

More specifically, the invention concerns a number plate holder suitably studied to allow the "a jour" mounting of the number plate.

Now, number plate holders are essentially comprised of a metal support coupled with the vehicle, on which the number plate is mounted.

In the most recent solutions, metallic support has a determined thickness or depth in such a way to allow the mounting of the number plate on any kind of vehicle.

Furthermore, in order to conform to all or almost all the vehicles presently on the market, it provides a number of slots and holes that should correspond to any kind of coupling provided on the same vehicle.

These number plate holders are suitably studied and realised to conform to the number plates provided by the different rules.

In this situation, the same Applicant has realised an universal number plate holder, which is the subject of the European patent application N° 0 706 913, allowing to optimise all the needings, solving all the problems connected with the prior art number plate holders.

New number plates are being introduced, having different features, that could not be mounted using the number plate holders of the prior art, except for the one according to the above mentioned application of the same Applicant.

Said number plates provide a kerb having a rear cavity along the peripheral edge, which can be considered as a frame having both the effect of a structural reinforcement and of a finishing.

These number plates have four holes for the direct fixing on the automobiles, such as those manufactured by FIAT, already providing this kind of holes.

Therefore, being them already finished with a frame, it could be useless providing a number plate holder, but for the mounting on automobiles providing different coupling holes, and therefore in any case requiring a number plate holder.

However, in this case, the number plate holders, has no more, at least necessarily, the function of a esthetical frame, but only the function of support and eventually it can be used to provide an advertisement strip. In this case it could be useful also for automobiles already properly arranged beforehand with the holes for fixing the number plate.

US-A-4,314,417 describes a number plate holder according to the preamble of claim 1.

In this situation, the applicant has found a solution perfectly adaptable to the new number plates, making a support of the same number plate for its mounting on any kind of automobile, maintaining its appearance unmodified.

This problem is solved by the features of claim 1.

Preferred embodiments of the invention are disclosed in the dependent claims 2 to 12.

The present invention will be now described, for illustrative but not limitative purposes, according to its preferred embodiments, with particular reference to the figures of the enclosed drawings, wherein:
figure 1 is a perspective exploded view of a first embodiment of the number plate holder according to the invention, with the relevant number plate;
figure 2 is a front view of the number plate holder of figure 1;
figure 3 is a vertical section view of the number plate holder of figure 1 according to the invention with the relevant number plate;
figure 4 shows a particular of the number plate holder of figure 1;
figure 5 is a perspective view of a second embodiment of the number plate holder according to the invention;
figure 6 is a vertical section view of the number plate holder of figure 5 according to the invention with the relevant number plate;
figure 7 is a perspective exploded view of a third embodiment of the number plate holder according to the invention, with the relevant number plate;
figure 8 is a perspective exploded view of a fourth embodiment of the number plate holder according to the invention, with the relevant number plate;
figure 9 is a perspective exploded view of a fifth embodiment of the number plate holder according to the invention, with the relevant number plate;
figure 10 is a perspective exploded view of a sixth embodiment of the number plate holder according to the invention, with the relevant number plate;
figure 11 is a perspective exploded view of a seventh embodiment of the number plate holder according to the invention, with the relevant number plate; and
figure 12 is a perspective exploded view of an eighth embodiment of the number plate holder according to the invention, with the relevant number plate.

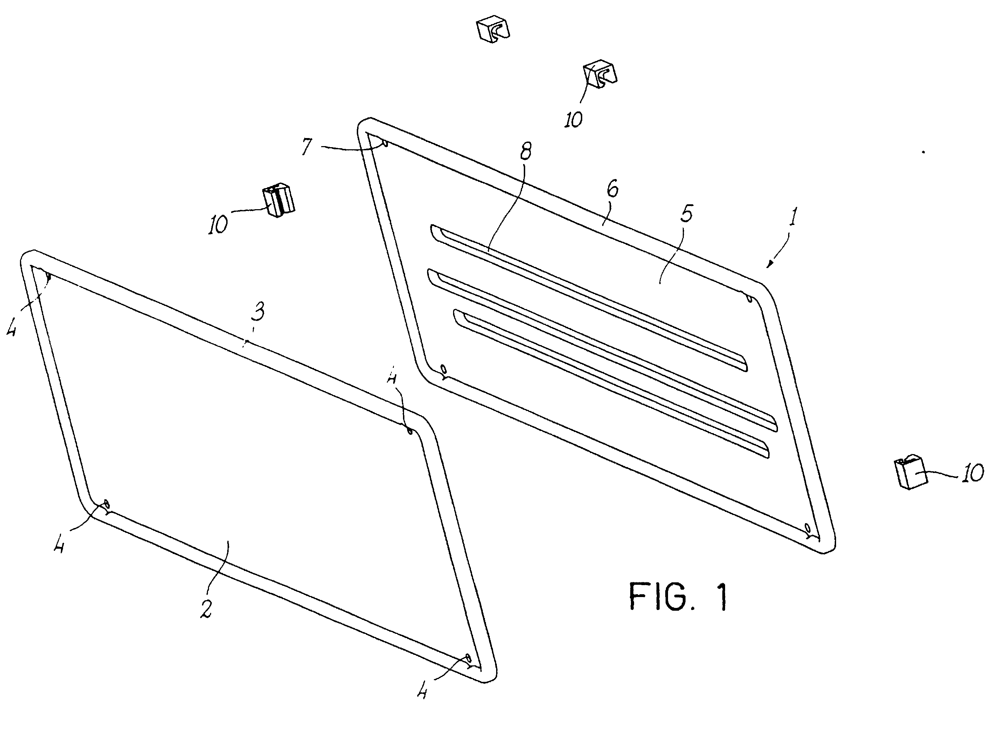

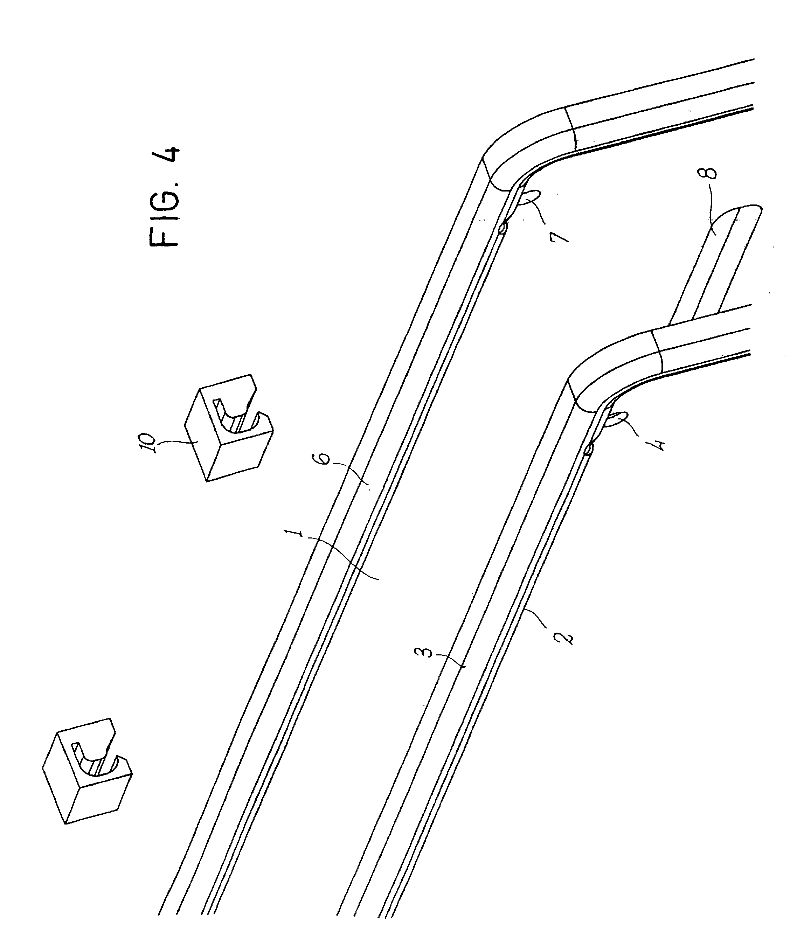

Referring first to figures 1 - 4, a first number plate holder 1 according to the invention is shown, on which the number plate 2 can be placed.

Said number plate 2 perimetric provides a kerb 3, which has a rear cavity, having rounded corners.

On the number plate 2, four holes 4 are provided for the fixing of the number plate 2 directly on the vehicle.

Number plate holder 1 according to the invention comprises a substantially flat plate 5, on the perimeter having a kerb 6, realised in such a way to be able to couple on the rear with the cavity kerb of the number plate 2.

Number plate holder 1 also has holes 7 corresponding to the holes 4 of the number plate 2. On the plate of the number plate holder 1 a plurality of holes or slots 8 is provided, having any shape and dimensions, in such a way to be able to couple with any vehicle on which the number plate must be 2 applied.

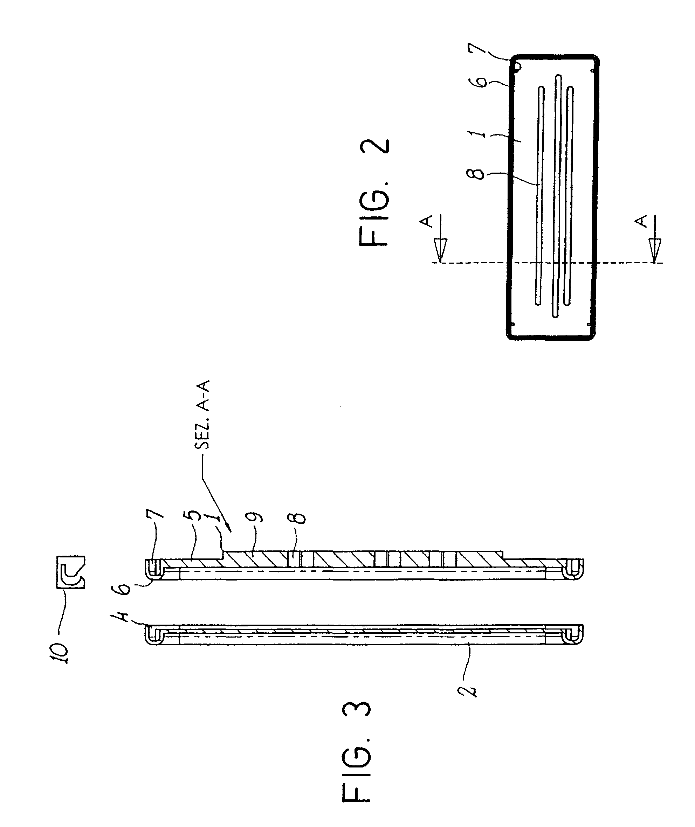

As it can be noted from figure 3, the plate of the number plate holder 1 has a projection 9 allowing a better coupling with the vehicle.

From figure 3 it can be more specifically noted the coupling between number plate 2 and number plate holder 1 according to the invention.

Particularly, the kerb 6 of the number plate holder 1 enters within the kerb 3 of the number plate 2. In this way, number plate 2 is supported, but this cannot be noted from outward, thus maintaining unmodified the esthetical appearance

To block the coupling between number plate holder 1 and number plate 2, snapping springs 10 are provided.

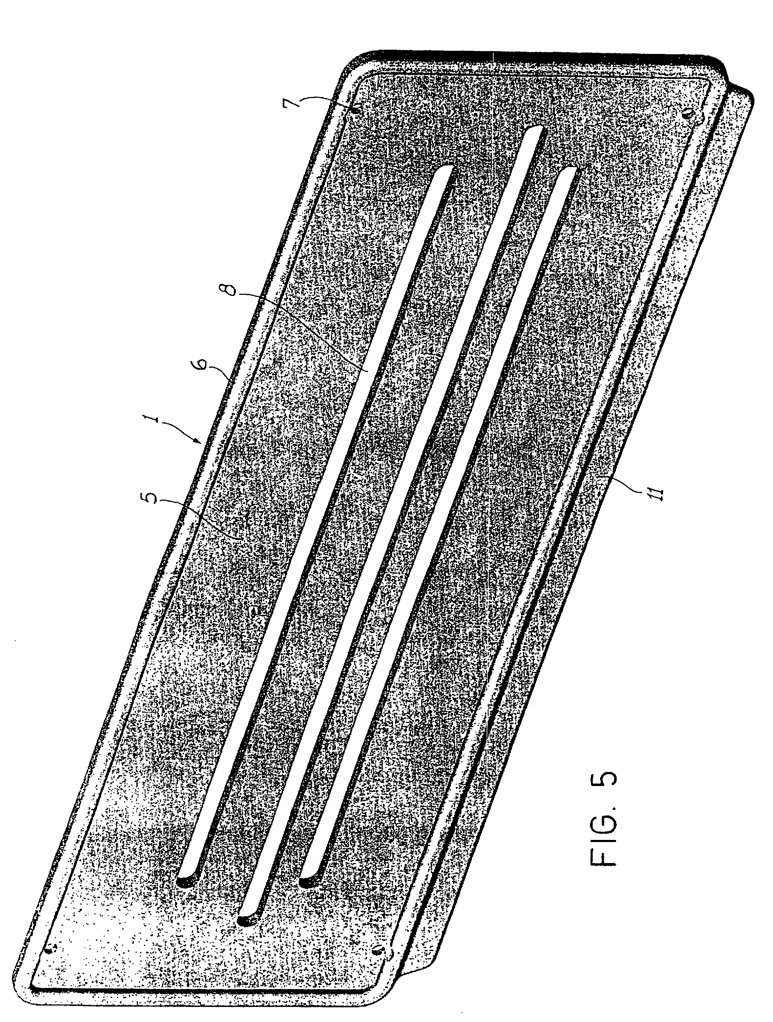

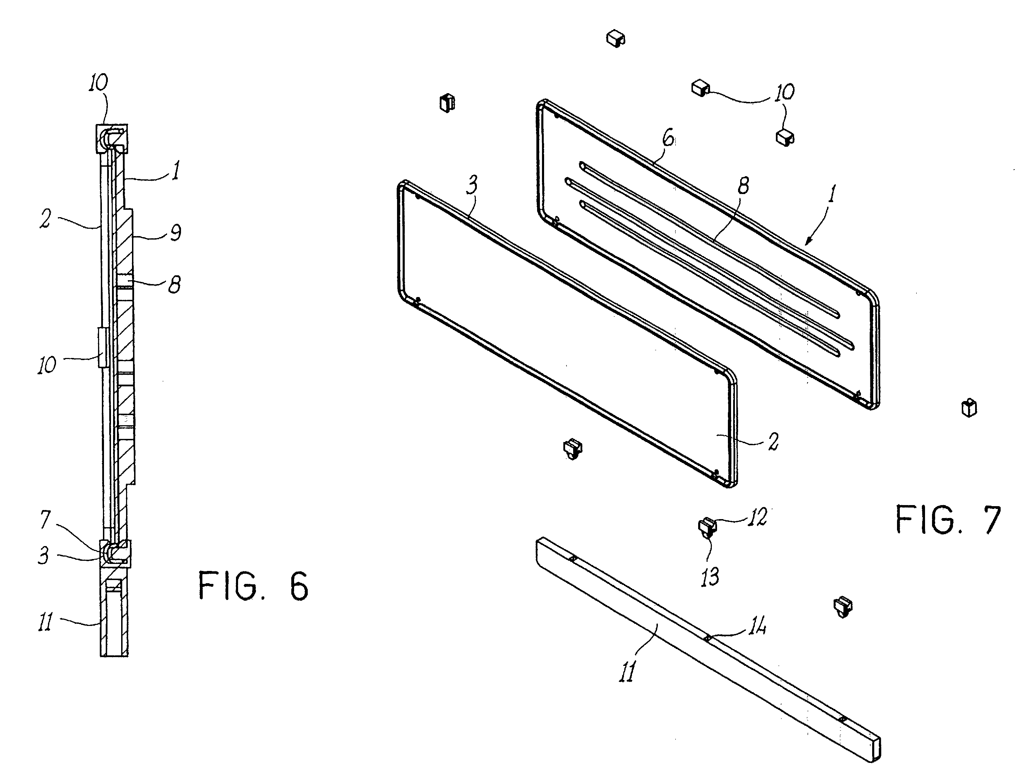

Observing now figures 5 and 6, it can be noted a second embodiment of the number plate holder according to the invention, wherein the same elements are indicated with the same reference numbers used in figures 1 - 4

The substantial difference with respect to the preceding embodiment is the presence of the band 11 to provide advertisement notices. As it will be better explained in the following, said band 11 can be integral with the number plate holder 1, or it can be coupled with the same in a different manner.

Particularly, in figure 7, it is shown an embodiment providing the coupling between the band 11 and the number plate holder 1 by springs 12, at the bottom having a fixed joint 13 coupling with suitable holes 14 realised on the band 11.

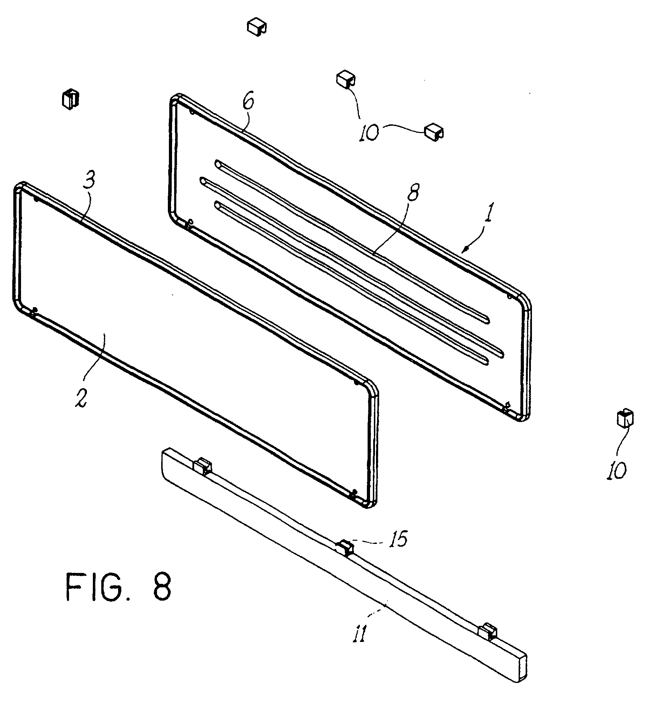

Instead, the embodiment of figure 8 provides springs integral with the band 11, and at the bottom coupling with the number plate holder 1.

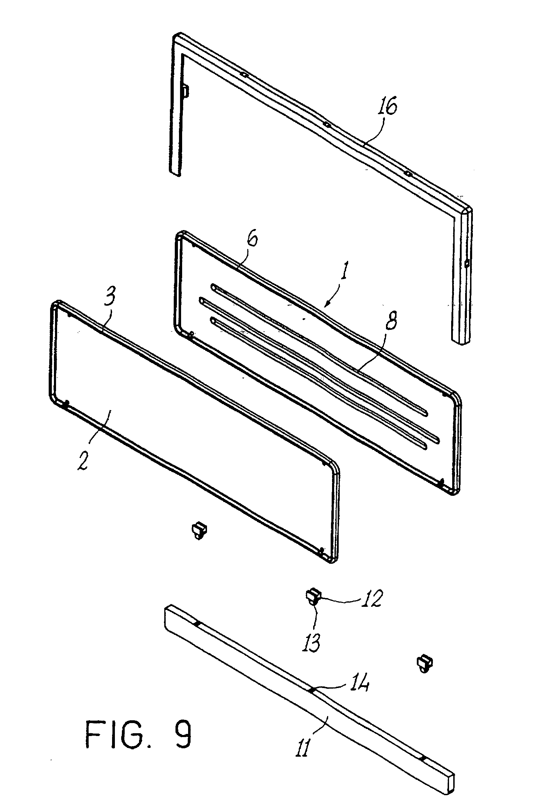

Solution of figure 9 is very similar to the one shown in figure 7. In this case, also an inverted U-shaped outer frame 16 is provided. externally coupling with the number plate holder 1 according to the invention, and on which further notices can be provided.

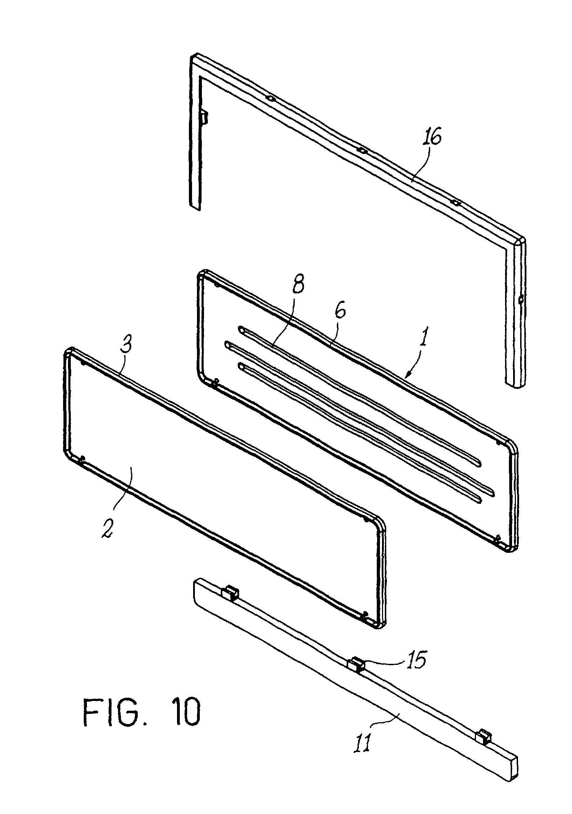

Analogously, the solution shown in figure 10 is similar to the solution shown in figure 8, with the provision of the frame 16, exactly as occurs in the embodiment of figure 9.

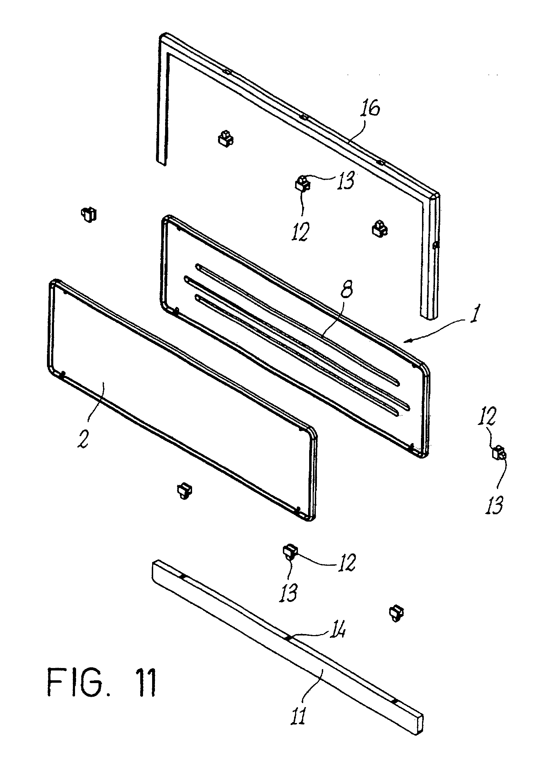

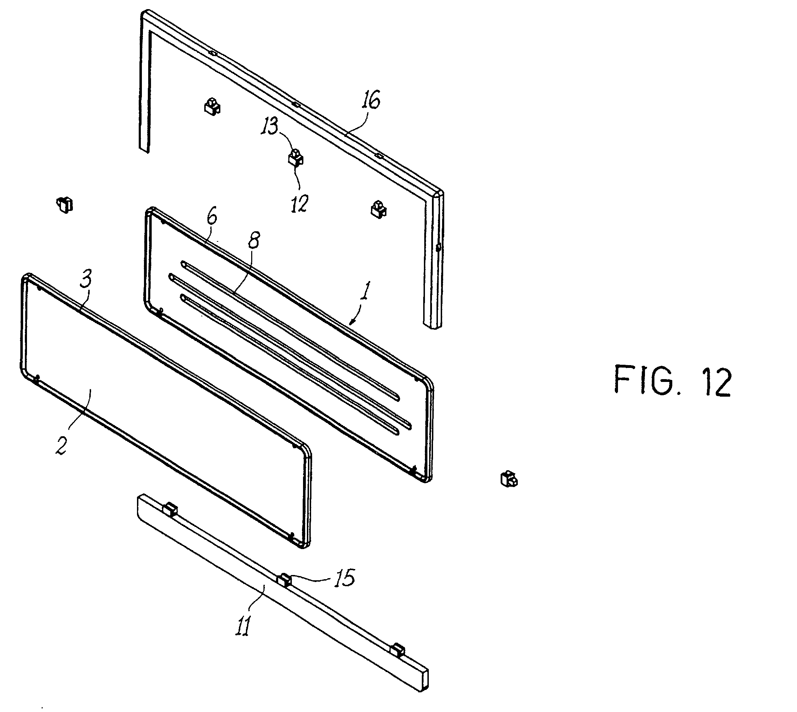

In figures 11 and 12 further instructions are shown, providing the band 11 and the frame 16, fixed in various way to the number plate holder 1 according to the invention.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Number plate holder (1) suitable to be coupled with a number plate (2) comprising a perimetric kerb (3) which has a rear cavity, said number plate holder (1) comprising a central plate portion (5) substantially flat on the front portion, a rear perimetric kerb (6) and holes (7) or slots (8) for coupling with the vehicle, **characterized in that**, said perimetric kerb (6) of the number plate holder (1) is realized in such a way that it enters within the rear cavity of said perimetric kerb (3) of the number plate (2), when coupled thereto.

2. Number plate holder (1) according to claim 1, **characterised in that** said kerb of the number plate holder has rounded corners suitable to be coupled with rounded corners of said kerb (3) of the number plate (2).

3. Number plate holder (1) according to one of the preceding claims, **characterised in that** said number plate holder (1) has four holes for coupling with the vehicle and said number plate which has corresponding holes.

4. Number plate holder (1) according to one of the preceding claims, **characterised in that** universal holes and/or slots are provided on said number plate holder, for the fixing of the same on any vehicle.

5. Number plate holder (1) according to one of the preceding claims, **characterised in that** snap elements (10) are provided for the coupling between number plate (2) and number plate holder (1).

6. Number plate holder (1) according to one of the preceding claims, **characterised in that** said number plate holder (1) provides on the rear part a portion projecting (9) from said plate central portion (5).

7. Number plate holder (1) according to one of the preceding claims, **characterised in that** said number plate holder (1) at the bottom provides a band (11) to provide advertisement notices.

8. Number plate holder (1) according to claim 7, **characterised in that** said band (11) is integral with said number plate holder (1).

9. Number plate holder (1) according to claim 7, **characterised in that** said band (11) is coupable with said number plate holder (1) by snapping coupling means (12) removably fixed to the band (11).

10. Number plate holder (1) according to one of the preceding claims, **characterised in that** said number plate holder (1) provides an inverted U-shaped upper frame (16) to provide notices.

11. Number plate holder (1) according to claim 10, **characterised in that** said upper frame (16) is integral with said number plate holder (1).

12. Number plate holder (1) according to claim 10, **characterised in that** said upper frame (16) is coupable with said number plate holder by snap coupling means fixed to the frame (16) or removably coupable with the same.

## Patentansprüche

1. Nummernschildhalter (1) zur Verbindung mit einem Nummernschild (2), welches eine umlaufende Vertiefung (3) mit einer rückwärtigen Höhlung, einen mittleren Schildteil (5), der auf dem Frontteil im wesentlichen flach ist, eine rückwärtige umlaufende Vertiefung (6) und Löcher (7) oder Schlitze (8) zur Verbindung mit dem Fahrzeug hat, **dadurch gekennzeichnet, dass** die umlaufende Vertiefung (6) des Nummernschildhalters (1) derart ausgebildet ist, dass sie bei der Verbindung in die rückwärtige Höhlung der umlaufenden Vertiefung (3) des Nummernschildes (2) eintritt.

2. Nummernschildhalter (1) nach Anspruch 1, **dadurch gekennzeichnet, dass** die Vertiefung des Nummernschildhalters abgerundete Ecken hat, die sich mit den abgerundeten Ecken der Vertiefung (3) des Nummernschildes (2) verbinden lassen.

3. Nummernschildhalter (1) nach einem der vorstehenden Ansprüche, **dadurch gekennzeichnet, dass** er vier Löcher zur Verbindung mit dem Fahrzeug hat und dass das Nummernschild entsprechende Löcher aufweist.

4. Nummernschildhalter (1) nach einem der vorstehenden Ansprüche, **dadurch gekennzeichnet, dass** er mit universellen Löchern und/oder Schlitzen zur Befestigung mit irgendeinem Fahrzeug ausgebildet ist.

5. Nummernschildhalter (1) nach einem der vorstehenden Ansprüche, **gekennzeichnet durch** Schnappelemente (10) zur Verbindung des Nummernschildes (2) mit dem Nummernschildhalter (1).

6. Nummernschildhalter (1) nach einem der vorstehenden Ansprüche, **gekennzeichnet durch** einen an seiner Rückseite vom mittleren Schildteil (5) wegragenden Teil (9).

7. Nummernschildhalter (1) nach einem der vorstehenden Ansprüche, **dadurch gekennzeichnet, dass** er an der Unterseite einen Streifen (11) für Reklamehinweise enthält.

8. Nummernschildhalter (1) nach Anspruch 7, **dadurch gekennzeichnet, dass** der Streifen (11) einteilig mit dem Nummernschildhalter (1) ausgebildet ist.

9. Nummernschildhalter (1) nach Anspruch 7, **dadurch gekennzeichnet, dass** der Streifen (11) mit dem Nummernschildhalter (1) durch Schnappkupplungselemente (12) koppelbar ist, die entfernbar an dem Streifen (11) angebracht sind.

10. Nummernschildhalter (1) nach einem der vorstehenden Ansprüche, **dadurch gekennzeichnet, dass** er einen oberen Rahmen (16) in Form eines umgekehrten U für Hinweise enthält.

11. Nummernschildhalter (1) nach Anspruch 10, **dadurch gekennzeichnet, dass** der obere Rahmen (16) einteilig mit dem Nummernschildhalter (1) ausgebildet ist.

12. Nummernschildhalter (1) nach Anspruch 10, **dadurch gekennzeichnet, dass** der obere Rahmen (16) mit dem Nummernschildhalter durch Schnappkupplungselemente koppelbar ist, die fest oder entfernbar mit dem Rahmen (16) verbunden sind.

## Revendications

1. Porte-plaque minéralogique (1) adapté pour être accouplé à une plaque minéralogique (2) comportant une bordure périphérique (3) qui a une cavité arrière, ledit porte-plaque minéralogique (1) comportant une partie de plaque centrale (5) sensiblement plate sur la partie avant, une bordure périphérique arrière (6) et des trous (7) ou des fentes (8) pour accouplement au véhicule, **caractérisé en ce que** ladite bordure périphérique (6) dudit porte-plaque minéralogique (1) est réalisée d'une manière telle qu'elle entre à l'intérieur de la cavité arrière de ladite bordure périphérique (3) de la plaque minéralogique (2), lorsqu'elle est accouplée à celle-ci.

2. Porte-plaque minéralogique (1) selon la revendication 1, **caractérisé en ce que** ladite bordure du porte-plaque minéralogique a des coins arrondis, adaptés pour être accouplés à des coins arrondis de ladite bordure (3) de la plaque minéralogique (2).

3. Porte-plaque minéralogique (1) selon l'une quelconque des revendications précédentes, **caractérisé en ce que** ledit porte-plaque minéralogique (1) a quatre trous pour accouplement au véhicule et à ladite plaque minéralogique qui a des trous correspondants.

4. Porte-plaque minéralogique (1) selon l'une quelconque des revendications précédentes, **caractérisé en ce que** des trous et/ou des fentes universelles sont fourni(e)s sur ledit porte-plaque minéralogique, pour la fixation de celui-ci sur un véhicule quelconque.

5. Porte-plaque minéralogique (1) selon l'une quelconque des revendications précédentes, **caractérisé en ce que** des éléments d'encliquetage (10) sont fournis pour l'accouplement entre la plaque minéralogique (2) et le porte-plaque minéralogique (1).

6. Porte-plaque minéralogique (1) selon l'une quelconque des revendications précédentes, **caractérisé en ce que** ledit porte-plaque minéralogique (1) prévoit sur la partie arrière, une partie faisant saillie (9) à partir de ladite partie centrale de plaque (5).

7. Porte-plaque minéralogique (1) selon l'une quelconque des revendications précédentes, **caractérisé en ce que** ledit porte-plaque minéralogique (1), au niveau de la partie inférieure, prévoit une bande (11) pour fournir des indications de publicité.

8. Porte-plaque minéralogique (1) selon l'une quelconque des revendications précédentes, **caractérisé en ce que** ladite bande (11) est en un seul bloc avec ledit porte-plaque minéralogique (1).

9. Porte-plaque minéralogique (1) selon la revendication 7, **caractérisé en ce que** ladite bande (11) peut être accouplée audit porte-plaque minéralogique (1) par l'intermédiaire de moyens d'accouplement par encliquetage (12) fixés de manière amovible sur la bande (11).

10. Porte-plaque minéralogique (1) selon l'une quelconque des revendications précédentes, **caractérisé en ce que** ledit porte-plaque minéralogique (1) prévoit un châssis supérieur en forme de U inversé (16) pour fournir des indications.

11. Porte-plaque minéralogique (1) selon la revendication 10, **caractérisé en ce que** ledit châssis supérieur (16) est en un seul bloc avec ledit porte-plaque minéralogique (1).

12. Porte-plaque minéralogique (1) selon la revendication 10, **caractérisé en ce que** ledit châssis supérieur (16) peut être accouplé audit porte-plaque minéralogique (1) par des moyens d'accouplement par encliquetage (12) fixés sur le châssis (16), ou peut être accouplé de manière amovible à celui-ci.
